# EUROPEAN PATENT SPECIFICATION

(11) **EP 1 491 578 B1**
(45) Date of publication and mention of the grant of the patent: **03.03.2010**
(21) Application number: 03077010.1
(22) Date of filing: 27.06.2003
(51) Int. Cl.: C08J 9/00, C08J 9/08, C08L 53/02, C08F 8/04

(54) **Foamable polymeric compositions and articles containing foamed compositions**
Schäumbare Polymerzusammensetzungen und geschäumte Zusammensetzungen enthaltende Gegenstände
Compositions de polymères expansibles et articles contenant des compositions expansées

(43) Date of publication of application: 29.12.2004
(73) Proprietor: KRATON Polymers Research B.V., 1030 BH Amsterdam (NL)
(72) Inventor: Muyldermans, Xavier, 1348 Ottignies-Louvain-La-Neuve (BE); Coignoul, Emmanuelle, 1348 Ottignies-Louvain-La-Neuve (BE)
(74) Representative: Kortekaas, Marcel C.J.A.

(56) References cited:
- WO-A-00/26103
- WO-A-01/02263
- US-A- 6 127 444

## Description

### Field of the invention

The present invention relates to a polymeric composition, which can be used to produce a foamed composition. The present invention further relates to a foaming process, to a pre-blend comprising at least two of the constituents of the polymeric composition and articles containing the foamed composition.

### Background of the invention

Foamed polymeric compositions are well known in the art and are being used widely in industry for a variety of purposes.

Although compositions comprising selectively hydrogenated block copolymers of monovinyl aromatic hydrocarbon and conjugated diene have shown interesting properties, it has appeared that the until now available foamed compositions did not meet the present combination of required properties which are necessary for the efficient manufacture of modern foamed articles, e.g. foamed weather seal articles for automotives, ships, aircrafts and the like.

It has been found that relatively high molecular weight, selectively hydrogenated block copolymers of monovinyl aromatic hydrocarbon and conjugated diene, i.e. having a total molecular weight of at least 350,000, were only foamable to acceptable density reductions when combined with an oil and large amounts of a polyolefin, which caused the final articles a too high hardness.

On the other hand it has been found that relatively low molecular weight selectively hydrogenated block copolymers of monovinyl aromatic hydrocarbon and conjugated diene, i.e. having a molecular weight of up to 180,000, could be foamed with smaller amounts of or even without polyolefin. However, an important drawback of said foamed compositions was the bad heat resistance.

It was also known from e.g. US patent no 6,221,964 to manufacture foamed compositions, comprising thermoplastic vulcanizates, which had been mechanically foamed with water or other physical blowing agents.

In general, said foamed compositions had been derived from EPDM, polyolefin and more in particular polypropylenes and oil, by mixing in an extruder with a cross linking agent as main component.

A known disadvantage of said foamed compositions derived from thermoplastic vulcanizates was that they were rather hygroscopic and could not be applied as weather seal articles.

From US patents nos. 4,764,535 and 4,677,133 elastomer compositions were known which could be foamed into elastomeric cellular products. The elastomeric compositions comprised a mixture of two thermoplastic rubber compounds, a nucleating agent for enhancing the neutrophilic structure, an unstable detackifying resin and optionally polybutene and/or amorphous polypropylene. However, the final properties of the foamed articles could not meet the present requirements and in particular the heat resistance appeared to be insufficient.

From US patent no 5,939,464 elastic foams were known which were prepared from a reprocessable blend of a thermoplastic vulcanizate and an elastic thermoplastic polymer, comprising either one block copolymer, having 2 or more poly(styrene) blocks or poly(substituted styrene) blocks per polymer molecule, or a polymer having at least 40 wt% repeat units from ethylene, or combinations thereof.

From the tables it was clear that compositions comprising selectively hydrogenated block copolymers, having poly(styrene) blocks and poly(butadiene) or poly(isoprene) blocks before hydrogenation, could not be foamed with water. On the other hand it appeared that compositions comprising similar unhydrogenated block copolymers could not meet the heat resistance and UV resistance requirements.

From US patent no 6,127,444 a polymeric composition was known, comprising
a) One block copolymer, comprising at least two external monovinyl aromatic hydrocarbon blocks and at least one internal hydrogenated conjugated diene block, wherein the total monovinyl aromatic hydrocarbon content is from 20 to 50 wt% and whereof the total apparent molecular weight is from 140,000 to 400,000 g/mole,
b) plasticizer, in amounts of from 50 to 250 parts by weight per 100 parts of block copolymer,
c) poly-(butene 1), having a melt index at 2.16 kg/190°C of from 0.05 to 400, and
d) blowing agent.

The final properties of foamed articles derived from said compositions, have appeared to be unable to meet the present combination of requirements, and in particular the heat resistance.

From the Italian patent application no 2000 MI0850 a process was known for the manufacture of elastomeric foam and the manufacture of stoppers and corks, by mixing at 160-210°C a first component, comprising one or more thermoplastic elastomers, a plastomer and plasticizers, with a second component, comprising an elastomer containing at least one blowing agent, followed by compression moulding at 180-210°C. The blowing agent was neat or modified azodicarbonamide or mixtures of NaHCO₃ and citric acid. The elastomers were styrene-ethylene-butylene copolymer (SEBS), styrene-ethylene-propylene copolymer (SEPS or SEEPS) or styrene-butadiene (SBS). The plastomer was selected from polypropylene, propylene copolymers, ethylene-vinyl acetate copolymer or LDPE. The plasticizer was mineral oil. The moulded products had a Shore A hardness of from 65-95. However, such foamed compositions appeared unable to withstand mechanical stresses at temperatures above 70° and were shown to be too hard when used for e.g. weatherstrips.

It will be appreciated that there is still a growing need for thermoplastic foamable compositions which can be efficiently processed into flexible, heat resistant, closed cell extruded articles of difficult sophisticated profiles, wherein the foamed material has a regular cell structure in all directions and without any substantial scrap material.

As result of extensive research and experimentation such foamable compositions aimed at have now surprisingly been found.

### Summary of the invention

Accordingly the present invention relates to foamable compositions which are usable for the manufacture of foamed, flexible, heat resistant, thermoplastic elastomeric articles, and which comprise at least:
a) 100 parts by weight of one ore more selectively hydrogenated block copolymers, having at least two resinous blocks A of non-hydrogenated predominantly polymerized monovinyl arene, and a selectively hydrogenated elastomeric block B, wherein said block B prior to hydrogenation being predominantly a polymerized conjugated diene or dienes, said block copolymer having a total apparent molecular weight of at least 250 kg/mole, and containing polymerized monovinyl arene blocks of true molecular weight of at least 18 kg/mole,
b) 5 to 50 parts by weight of one or more selectively hydrogenated block copolymers having at least two resinous blocks A' of non-hydrogenated predominantly polymerized monovinyl arene, and an selectively hydrogenated elastomeric block B', wherein said block B' prior to hydrogenation has been derived from a polymerized conjugated diene or dienes as a major component which may be mixed with minor proportions of other copolymers (e.g. vinyl aromatic) i.e. ≤ 25 wt%, and said block copolymer having a total apparent molecular weight in the range of from 50 to 180 kg/mole, while the resinous blocks A' shown an true molecular weight in the range of from 3 to 20 kg/mole and preferably from 5 t0 15 kg/mole,
c) from 25 to 80 parts by weight of a linear crystalline polymer comprising propylene as major component, with a Vicat softening temperature in the range of from 130°C to 180°C and a MFR in the range of from 0.5 to 30 dg/min and a polydisperity index of at least 4.5,
d) from 100 to 250 parts by weight of a softener compatible with blocks B and B',
e) from 0.01 to 3 wt%, relative to the weight of the primary components (a) up to (e) of a solid chemical nucleating agent of the endothermic group, in combination with a blowing agent, and optionally
f) one or more secondary components selected from PPO and or any resins compatible with block copolymer component (a), antioxidants, UV-stabilizers, flame retardants, surface modifying agents and inorganic fillers.

In addition the present invention also relates to foamed articles, derived from the hereinbefore specified foamable compositions, to a foaming process using said hereinbefore specified foamable compositions and to preblends comprising at least the component (a) and one or more of (c) and (d), or comprising component (b) optionally combined with (c) and/or (d). Secondary ingredients should be included in preblends comprising component (a).

### Detailed description of the invention

The preferred block copolymer structure of the components (a) and (b) can have the general formulae

ABA, (AB)ₙX or ABA"B" and A'B'A', (A'B')ₙX or A'B'A"B"

respectively, wherein A, A' and A" represent a poly(monovinyl arene) block and B, B' and B" represent a hydrogenated poly(conjugated diene(s)) block, wherein n is an integer ≥2 and wherein X is the remainder of a coupling agent.

It will be appreciated that the blocks A, A' and A" are different from each other, in that the blocks A are larger than the blocks A', which are in turn larger than A", while the blocks B, B' an B" may be the same or different. Preferably the blocks B and B' will be larger than B" or equal.

A more preferred block copolymer component (a) has the formula ABA or (AB)ₙX, has a total apparent molecular weight in the range of from 250 to 600 kg/mole, while the poly(monovinyl arene) block content in said block copolymer (a) is in the range of from 20 to 35 wt%.

The monovinyl aromatic monomer is typically selected from styrene, C₁-C₄ alkylstyrene and C₁-C₄ dialkylstyrene, in particular styrene, α-methylstyrene, o-methylstyrene or p-methylstyrene, 1,3-dimethylstyrene, p-tert.-butylstyrene or mixtures thereof, most preferably styrene.

The conjugated diene monomer is typically a conjugated diene monomer containing from 4 to 8 carbon atoms, such as 1,3-butadiene, 2-methyl-1,3-butadiene (isoprene), 2,3-dimethyl-1,3-butadiene or mixtures thereof, preferably butadiene or isoprene and most preferably butadiene.

Most preferred block copolymers ABA comprise substantially pure poly(styrene) blocks, each having a true molecular weight in the range of from 25 kg/mole to 60 kg/mole.

More preferred block copolymer component (b) has the formula A'B'A' or (A'B')ₙX, and has a total apparent molecular weight in the range of from 80 to 160 kg/mole.

Most preferred block copolymers A'B'A' or (A'B')ₙX comprise substantially pure poly(styrene) blocks, each having a true molecular weight in the range of from 5 to 15 kg/mole.

A preferred weight ratio between the block copolymer components (a) and (b) is in the range from 10 to 40 parts by weight of component (b) per 100 parts by weight of component (a).

It will be appreciated that the presence of two block copolymer components, having a high and a low molecular weight respectively, and their specified mutual weight ratios are critical. It has been found that if no high molecular weight block copolymer is present in the composition or only in proportions below the specified range, a inferior too high compression set and inferior foam stabilisation will occur. If no low molecular weight block copolymer is present in the composition or only in proportions below the specified range, bad foam densities have been found due to wrong flow and/or bad hardness (too rigid foams).

The block copolymer components (a) and (b) can be prepared by sequential polymerization of the respective batches and selective hydrogenation of B, B' or B" blocks in the obtained block copolymer, or by initial preparation of e.g. a living diblock AB precursor which can be coupled with a coupling agent into A-B-A or (AB)ₙX block copolymers, which can be subsequently selectively hydrogenated.

The block copolymers (a) and (b) may, for example, be prepared by coupling at least two diblock copolymer molecules AB or A'B' together. As the coupling efficiency is not 100%, the block copolymer (a) will contain uncoupled diblock copolymer. The block copolymer components (a) and (b) may however also consist of a blend of block copolymers, one being a diblock copolymer.

As examples of the coupling agent may be mentioned tin coupling agents such as tin dichloride, monomethyltin dichloride, dimethyltin dichloride, monoethyltin dichloride, diethyltin dichloride, methyltin trichloride, monobutyltin dichloride, dibutyltin dibromide, monohexyltin dichloride and tin tetrachloride; halogenated silicon coupling agents such as dichlorosilane, monomethyldichlorosilane, dimethyldichlorosilane,diethyldichlorosilane, monobutyldichlorosilane, dibutyldichlorosilane, monohexyldichlorosilane, dihexyldichlorosilane, dibromosilane, monomethyldibromosilane, dimethyldibromosilane, silicon tetrachloride and silicon tetrabromide; alkoxysilanes such as tetramethoxysilane; divinyl aromatic compounds such as divinylbenzene en divinyl naphthalene; halogenated alkanes such as dichloroethane, dibromoethane, methylene chloride dibromomethane, dichloropropane, dibromopropane, chloroform, trichloroethane, trichloropropane and tribromopropane; halogenated aromatic compounds such as dibromobenzene; epoxy xompounds such as the diglycidyl ether of bisphenol-A (e.g. EPON 825, a trademark), and other coupling agents such as benzoic esters, CO₂, 2-chloroprene and 1 chloro-1,3-butadiene.

Of these EPON 825 diglycidyl ether, dibromobenzene, tetramethoxysilane and dimethyldichlorosilane are preferred.

The block copolymer components (a) and (b) to be used in the compound of the present invention may be prepared by any method known in the art including the well known full sequential polymerization method, optionally in combination with re-initiation, and the coupling method, as illustrated in e.g. US patents nos 3,231,635; 3,251,905; 3,390,207; 3,598,887; and 4,219,627 and EP 0413294 A2, 03876671 B1, 0636654 A1, WO 94/22931.

The anionic polymerization of the butadiene is typically controlled with structure modifiers such as diethyl ether or ethyl glyme (1,2-diethoxyethane), to obtain the desired amount of 1.2-addition. As described in Re 27,145, the level of 1,2-addition of a butadiene polymer or copolymer can greatly affect elastomeric properties after hydrogenation. The 1,2-addition of butadiene polymers significantly and surprisingly additionally influences the polymer as described above. More in particular, a 1,2-addition of 78% (within the scope of this invention) is achieved during polymerization by the presence of about 300 ppm of 1,2-diethoxypropane (DEP) in the final solution.

It will be appreciated that independently of the monomer and the modification used in all the B blocks (B, B', B"), the ethylene content should be lower than 70 wt%.

In general, the polymers useful in this invention may be prepared by contacting the monomer or monomers with an organoalkali metal compound in a suitable solvent at a temperature within the range from -150°C to 300°C, preferably at a temperature within the range from 0°C to 100°C. Particularly effective polymerization initiators are organolithium compounds having the general formula

RLi

wherein R is an aliphatic,cycloaliphatic, alkyl-substituted cycloaliphatic, aromatic or alkyl-substituted aromatic hydrocarbon radical having from 1 to 20 carbon atoms of which sec.butyl is preferred.

Suitable solvents include those useful in the solution polymerization of the polymer and include aliphatic, cycloaliphatic, alkyl-substituted cycloaliphatic, aromatic and alkyl-substituted aromatic hydrocarbons, ethers and mixtures thereof. Suitable solvents, then, include aliphatic hydrocarbons such as butane, pentane, hexane and heptane, cycloaliphatic hydrocarbons such as cyclopentane, cyclohexane and cycloheptane, alkyl-substituted cycloaliphatic hydrocarbons such as methylcyclohexane and methylcycloheptane, aromatic hydrocarbons such as benzene and the alkyl-substituted hydrocarbons such as toluene and xylene, and ethers such as tetrahydrofuran, diethylether and di-n-butyl ether. Preferred solvents are cyclopentane or cyclohexane.

It will be appreciated that the B and B' and/or B" blocks in the finally applied block copolymers preferably have been selectively hydrogenated to a degree of at least 95%, whereas the poly(styrene) blocks have not been hydrogenated or only in a degree of at most 5%.

The hydrogenation of these polymers may be carried out by a variety of well established processes including hydrogenation in the presence of such catalysts as Raney Nickel, noble metals such as platinum and palladium and soluble transition metal catalysts. Suitable hydrogenation processes which can be used are ones wherein the diene-containing polymer or copolymer is dissolved in an inert hydrocarbon diluent such as cyclohexane and hydrogenated by reaction with hydrogen in the present of a soluble hydrogenation catalyst. Such processes are disclosed in US Patent Nos. 3,113,986, 3,700,633, 4,226,952 and Reissues 27,145. The polymers are hydrogenated in such a manner as to produce hydrogenated polymers having a residual unsaturation content in polydiene blocks of less than 5 percent by weight, preferably less than 1%wt and more preferably as close to 0 percent as possible, of their original unsaturation content prior to hydrogenation. A titanium catalyst such as disclosed in US Patent 5,039,755, may also be used in the hydrogenation process.

The hydrogenation degree can be analyzed using the Nuclear Magnetic Resonance (NMR) method.

Preferred examples of component (a) is KRATON G 1651, KRATON G MD 6917 ES, and KRATON G MD 6933 ES block copolymer, while a preferred example of component (b) is KRATON G 1650, KRATON G 1657, KRATON G 1652, KRATON G RP 6924 block copolymer. Most preferred block copolymer (a) is KRATON MD 6933 ES, while the most preferred block copolymers (b) are KRATON G RP 6924 and KRATON G 1657.

The crystalline polyolefin (component c) is preferably a single polymer or a mixture of polymers, predominantly composed of propylene monomer or a copolymer of predominantly propylene with a minor proportion of a different alkylene such as ethylene or butylenes, i.e. less than 25 wt% of the monomer mixture.

The preferred polyolefin can be characterized by a MFR between 2 and 15 dg/min at 230°C/2.16 kg, a Vicat softening temperature in the range of from 130 to 170°C and a polydispersity index ≥ 4.5.

A preferred weight ratio of the polyolefin relative to the weight of component (a) is from 42 to 65 parts by weight per 100 parts by weight of component (a).

Most preferred components (c) show a broad molecular weight distribution, i.e. a polydispersity index ≥ 5.

Said polydispersity index (PI), defined by Zeichner and Patel (Zeichner, G.R. and Patel, P.D., Proc. 2nd World Congr. Chem. Eng. 6, 373(1981)) for linear polypropylene (PP) as 10^5/Gc, and related to the molecular weight distribution through a strong correlation with Mw/Mn, is determined by means of an isothermal dynamic frequency sweep within the linear viscoelastic region of the molten material. In the internal Standard Operating Procedure SPRO003, test samples are prepared by compression moulding PP granules during 2-3 minutes at 190°C into discs of 25mm diameter and 1mm thickness. The dynamic frequency sweep is performed on a Rheometric RDA2 dynamic mechanical analyser, using cone and plate geometry (diameter 25mm, cone angle 0.1rad). Relevant test parameters are: temperature 190°°C, strain amplitude 10%, frequency rate 0.1-500 rad/s, data collection at 10 data points per decade. After sample insertion, an equilibrium time of 10min is respected. The cross-over modulus Gc (i.e. at the frequency where G'=G" =Gc) is calculated by conventional numerical interpolation, using the built-in software function "G'/G" Crossover", through data collection is sufficiently dense to obtain the same accuracy graphically.

Examples of said suitable crystalline polypropylenes are MOPLEN HP 502 L and MOPLEN HP 1078.

It will be appreciated that the type of selected polymer for component (c) is rather critical.

If the melt temperature is too high, bad foam densities are obtained as the blowing gas escapes and/or a bad foam skin is obtained, as the die pressure is too low and allows prefoaming.

If the melt temperature is too low, bad foam densities are obtained as the melt flow is too high to allow gas bubbles growth.

Component (d) is preferably formed by a paraffinic or naphtenic plasticizer compatible with the B blocks in the block copolymer components and leads to low fogging values.

Examples of said paraffinic plasticizers commonly used include oil, and preferably naphtenic or paraffinic oil and more preferably paraffinic oil. Examples of alternative plasticizers are aliphatic synthetic plasticizers or oligomers of randomly or sequentially polymerized styrene and conjugated diene, digomers of conjugated diene, such as butadiene or isoprene, liquid polybutene-1, and ethylene-propylene rubber, all having a weight average molecular weight in the range of from 0,3 to 30 kg/mole, preferably from 0,5 to 25 kg/mole and more preferably from 0,5 to 10 kg/mole. A preferred component (d) is PRIMOL^{™} 352 paraffinic oil.

In previous foaming compositions colloid silicates, carbon black and metal salts or aliphatic acid were used as nucleating agents, in amounts ranging from 0.25 to 5 wt%, relative to the weight of the elastomer composition.

The solid chemical nucleating agent (e) is preferably selected from mixtures of NaHCO₃ and citric acid or sodium citrate. Preferred amounts of said solid chemical nucleating agent are in the range of from 0.5 to 1 wt%, relative to the weight of the components (a) up to (d).

To obtain regular cell structure, both a nucleating agent as well as a blowing agent should be used. The nucleating agent is preferably dispersed in a masterbatch based on a poly(olefin) having a low melting point. For instance, HYDROCEROL^{™} BIH40 is an endothermic chemical blowing agent, releasing CO₂ and water, that also acts as a nucleating agent. It has been found now that an attractive regular distribution of entrapped gas could be obtained by the use of small amounts of the hereinbefore specified nucleating agent. The use of the specific combination of ingredients avoids the use of unstable detackifying resin, which was formerly used for obtaining closed, smooth surfaces of foamed articles.

The foamable compositions of the present invention will contain separate chemical or physical blowing agents in addition to the hereinbefore mentioned nucleating agents. In general, blowing agents can be selected from non-toxic physical blowing agents such as CO₂, N₂ or water, and compounds decomposing above a certain temperature, thereby releasing gas such as nitrogen, carbon dioxide or water, which causes a volume increase of the reaction mass. Carbon dioxide is a preferred blowing agent.

These blowing agents are used in amounts of from 0.5 to 10 wt%, relative to the weight of the total composition. The preferred blowing agent is HYDROCEROL™ BIH40 (which then also acts as nucleating agent). Alternative but less preferred blowing agents include GENITRON™ PB10 (releasing nitrogen) and CYLACELL™ (releasing water vapour).

The optional PPO resins if any, are primarily compatible with the block copolymer (a) and can be included in the foamable composition of the present invention in amounts of up to 80 parts by weight of block copolymer component (a) and more preferably in amounts of from 20 to 50 parts by weight per 100 parts by weight of block copolymer (A).

As indicated earlier, the foamable compositions of the present invention may also comprise further secondary components. Such as foaming agents, primary or secondary antioxidants, UV-stabilizers, surface modifying agents like waxes, silicone oils, kemamides, fluor polymers, in amounts known in the art of polymer compositions. Also inorganic fillers like CaCO₃, talc, TiO₂, carbon black may be included in amounts of up to 100 parts by weight per 100 parts by weight of composition (a). Also water releasing chemical compounds can be used such as metal salts containing hydrate water, metal hydroxides, organic diacids forming anhydrides and mixtures of ingredients which generate water through a polycondensation reaction.

It will be appreciated that the foams according to the present invention show a foam density in the range of from 0.3 to 0.8 kg/m³ and preferably from 0.4 to 0.6 kg/m³; a reduction of foam density in the range of from 25% to 70%, and preferably in the range of from 33% to 55% and a Shore A hardness < 70 and preferably < 65 and a compression set at 100°C of below 70% and preferably below 55%, measured on a non-foamed injection moulded test plate, 6mm thickness, made from the ingredients (a)-(f) without blowing agent.

It will be appreciated that another aspect of the present invention is formed by preblends of the intimately mixed hereinbefore specified components (a), (c) and (d) and of components (b), (c) and/or (d) respectively, optionally mixed with one or more secondary ingredients which can be used for the preparation of complete foamable compositions and foamed articles made thereof. This mixing must be carried out in a corotating twin screw extruder.

If a preblend composition without blowing agent is produced, the preblend can be further blended or tumble mixed with a blowing agent to prepare a masterbatch to be used in the actual foaming process.

If a preblend composition with blowing agent(s) is produced, care should be taken that during the blending process the temperature is kept below the blowing agent decomposition temperature, unless full or partial foaming is desired during the preblending operation.

Still another aspect of the present invention is formed by foamed flexible weather seal articles, prepared from the hereinbefore specified foamable compositions.

The flexible foamed profiled articles are preferably formed by a process which comprises the following steps: heating a mixture of the foamable polymeric composition of the present invention, prepared by mixing preblends, comprising respectively components (a), (c), and (d) and optionally (f) and components (b) , (c) and (d) and the blowing agent to a temperature above the melting point of the thermoplastic elastomer, and releasing the resulting mixture to atmospheric conditions.

The foaming process can be performed in any equipment, which is known to be used for foaming of a thermoplastic elastomer.

Preferably an extruder with L/D ≥ 20 is used and more preferably an extruder with L/D ≥ 25. The extruder should ensure a melt pressure > 10 bar and preferably > 15 bar before the exit. The temperature reached early in the extruder is above the melting point of the thermoplastic elastomer compositions, preferably ≥ 200°C.

If chemical blowing agent is used, the temperature inside the extruder should reach at least the decomposition temperature of that chemical blowing agent.

The temperature of the melt should be precisely controlled at the end of the extruder, particularly just before the exit of the die. The melt temperature at the die of the extruder is preferably 20°C lower or higher than the Vicat softening temperature of the component (c) used in the compositions, most preferred is a melt temperature 5 to 15°C higher than the Vicat Softening temperature of component (c).

The invention will be elucidated by the following examples, however without restricting its scope to these specific embodiments.

### Examples

Basic components used in the tested foamable compositions have been listed in Table 1.

**Table 1**

| High molecular weight | Component (a) |
|---|---|
| KRATON | Selectively hydrogenated linear block copolymer S-E/B-S having a very high |
| MD6933ES | molecular weight and a polystyrene content of 31 %wt. |
| KRATON | Selectively hydrogenated linear block copolymer S-E/B-S having a high |
| MD6917ES | molecular weight and a polystyrene content of 33 %wt. |

| Low molecular weight | Component (b) |
|---|---|
| KRATON G | Selectively hydrogenated linear block copolymer S-E/B-S having a medium |
| RP6924 | molecular weight and a polystyrene content of 22 %wt. |
| KRATON G1657 | Selectively hydrogenated linear block copolymer (S-E/B)₂ having a medium molecular weight and a polystyrene content of 13 %wt. |

| Polyolefin | Component (c) |
|---|---|
| MOPLEN HP501L | Homopolypropylene showing a MFR of 6 at 230°C/2.16 kg, a Vicat softening temperature VST/A50 of 154°C and a polydispersity index¹ of 4.00. |
| MOPLEN HP502L | Homopolypropylene showing a MFR of 5.5 at 230°C/2.16 kg, a Vicat softening temperature VST/A50 of 153°C and a polydispersity index of 5.49. |
| MOPLEN HP1078 | Homopolypropylene showing a MFR of 3 at 230°C/2.16 kg, a Vicat softening temperature VST/A50 of 154°C and a polydispersity index of 5.29. |
| MOPLEN F30S | Homopolypropylene showing a MFR of 12 at 230°C/2.16 kg, a Vicat softening temperature VST/A50 of 154°C and a polydispersity index of 3.97. |

| Plasticizer | Component (d) |
|---|---|
| PRIMOL 352 | Paraffinic oil. |

| Nucleating/ blowing agent | Component (e) |
|---|---|
| HYDROCEROL | Nucleating agent in small amounts, chemical blowing agent in greater |
| BIH 40 | amounts: Masterbatch 40%wt of endothermic chemical foaming and nucleating agents based on NaHCO₃ - Na Citrate. |
| CO2 | Physical blowing agent |
| GENITRON PB10 | Exothermic chemical blowing agent of the azodicarbonamide family at 10% concentration in PE |
| CYLACELL | Endothermic chemical blowing agent comprising a mixture of sodium and magnesium silicates with borates and water |

| Others | Component (f) |
|---|---|
| IRGANOX 1010 | Anti-oxidant. |
| IRGANOX PS800 | Anti-oxidant. |

| | |
|---|---|
| ¹ measured as defined by Zeichner and Patel as specified hereinbefore. | |

The tested foamable compositions presented in the various following tables have been prepared according to the hereinbefore specified process conditions.

### Table 2:

In this Table 2, all the ingredients were intimately mixed in a high shear co-rotating twin-screw extruder to obtain the thermoplastic elastomer compositions A up to G. The properties, Hardness and Compression Set (CS), were measured on non-foamed injection moulded plates of 6 mm thickness. The composition is further dryblended with 2%wt of a ready-to-use masterbatch of foaming and nucleating agents, here Hydrocerol BIH 40. These foamable preblend compositions were used in a single screw extruder with L/D = 20, heated up to 200°C, equipped of a tube die with an external diameter of 8 mm and a wall-die thickness of 0.8 mm, to produced a foamed profile. The die pressure was kept above 25 bar and the melt temperature was controlled to be around 164°C.

The foam density was measured on the foamed tube profile. Thermoplastic elastomer Compositions : not according to the invention except G (not preferred as not a dryblend - see Table 3)

| | A | B | C | D | E | F | G |
|---|---|---|---|---|---|---|---|
| Ingredients in phr : | | | | | | | |
| Kraton MD6933ES | 100 | 100 | 100 | | | | 100 |
| Kraton MD6917ES | | | | | | 15 | |
| Kraton RP6924 | | | | | | 85 | |
| Kraton G1657 | | | | 100 | 100 | | 19 |
| Primol 352 | 100 | 150 | 150 | 50 | 50 | 100 | 160 |
| Moplen HP502L (PI=5,49) | 30 | 30 | | 30 | | 40 | 52 |
| Moplen HP1078 (PI=5,29) | | | 30 | | 30 | | |
| Irg. 1010 | 0.2 | 0.2 | 0.2 | 0.2 | 0.2 | 0.2 | 0.2 |
| Irg. PS800 | 0.2 | 0.2 | 0.2 | 0.2 | 0.2 | 0.2 | 0.2 |

| Properties before foaming: | | | | | | | |
|---|---|---|---|---|---|---|---|
| Hardness 3s Shore A | 54 | 49 | | n.m. | | 48 | 58 |
| Hardness 30s Shore A | 48 | 43 | | n.m. | | 44 | 55 |
| CS 70°C 72h, % | 37 | 35 | | > 70 | | 88 | 47 |
| CS 85°C 72h, % | 41 | 39 | | > 100 | | 85 | 49 |
| CS 100°C 24h, % | 44 | 47 | | > 100 | | 85 | 52 |

| Properties after foaming: | | | | | | | |
|---|---|---|---|---|---|---|---|
| Foam density, 10³ kg/m³ | 0.72 | 0.76 | n.m. | n.m. | 0.62 | 0.66 | 0.64 |
| Density reduction after foaming, % | 24 | 20 | | | 35 | 31 | 33 |

| Composition in parts: | | | | | | | |
|---|---|---|---|---|---|---|---|
| Component (a): | 100 | 100 | 100 | 0 | 0 | 15 | 100 |
| Component (b): | 0 | 0 | 0 | 100 | 100 | 85 | 19 |
| Component (c): | 30 | 30 | 30 | 30 | 30 | 40 | 52 |
| Component (d): | 100 | 150 | 150 | 50 | 50 | 100 | 160 |
| n.m. = not measured | | | | | | | |

This table 2 shows that the presence of both components (a) and (b) in the right ratio is necessary to obtain good properties and good density reduction.

### Table 3

In the following examples, the previously mentioned compositions A up to C containing component (a) are dryblended with compositions D or E containing component (b), additional component (c) and with 2%wt of Hydrocerol BIH 40. The preblends 1 up to 5 are used for the foaming process as described above in Table 2.

Thermoplastic elastomer Compositions : according to the invention

| | 1 | 2 | 3 | 4 | 5 | G |
|---|---|---|---|---|---|---|
| Composition A | 100 | 100 | | | | |
| Composition B | | | | | | |
| Composition C | | | 100 | 100 | 100 | |
| Composition D | 12 | 25 | | | | |
| Composition E | | | 12 | 25 | 12 | |
| Composition G | | | | | | 100 |
| Moplen HP502L (PI=5,49) | 6 | 5 | | | | |
| Moplen F30S (PI = 3,97) | | | | | 6 | |
| Moplen HP1078 (PI=5,29) | | | 6 | 5 | | |

| Properties before foaming: | | | | | | |
|---|---|---|---|---|---|---|
| Hardness 3s Shore A | 58 | 58 | 59 | 56 | 56 | 58 |
| Hardness 30s Shore A | 55 | 52 | 55 | 52 | 52 | 55 |
| CS 70°C 72h | 48 | 48 | 47 | 49 | 47 | 47 |
| CS 85°C 72h | 51 | 50 | 50 | 51 | 50 | 49 |
| CS 100°C 24h | 51 | 53 | 50 | 50 | 50 | 52 |

| Properties after foaming: | | | | | | |
|---|---|---|---|---|---|---|
| Foam density, 10³ kg/m³ | 0.60 | 0.59 | 0.5 | 0.55 | 0.56 | 0.64 |
| Density reduction after foaming, % | 37 | 38 | 47 | 42 | 41 | 33 |

| Composition in parts: | | | | | | |
|---|---|---|---|---|---|---|
| Component (a): | 100 | 100 | 100 | 100 | 100 | 100 |
| Component (b): | 19 | 39 | 19 | 39 | 19 | 19 |
| Component (c): | 52 | 56 | 52 | 56 | 52 | 52 |

Examples 1 to 5 are dryblend compositions according to the invention. Composition 1 and G contains exactly the same amount of the same ingredients, but are prepared by different process steps. It is highlighted, in this table, that the two steps process (dryblending of the various compositions for composition 1) gives a higher density reduction than composition G (prepared in one step into the twin-screw extruder). The dryblend process is then preferred.

It should also be noticed that the example 5 contains a mixture of Moplen HP1078 and Moplen F30S. This polypropylene mixture has a PI = 4.97 and shows good overall properties even though Moplen F30S alone has not the required PI (3.97).

### Table 4

In Table 4, a new composition H is presented. This composition was prepared in a co-rotating twin-screw extruder as previously described. It contains
Kraton MD6933ES 100 parts
Primol 352 200
Moplen HP502L 50
Irganox 1010 0.2
Irganox PS800 0.2

The foamable compositions have all been prepared in the dryblend process, with 2%wt of Hydrocerol BIH 40.

The following examples show again the importance of the various ingredients ratio.

| | 7 | 8 | 9 | 10 | H | 11 |
|---|---|---|---|---|---|---|
| Composition B | 80 | 50 | 85 | 100 | | |
| Composition F | 20 | 50 | 10 | 25 | | |
| Composition H | | | | | 100 | 100 |
| Moplen HP502L (PI=5,49) | | | 5 | 5 | | 12.5 |

| Properties before foaming: | | | | | | |
|---|---|---|---|---|---|---|
| Hardness 3s Shore A | 49 | 51 | 58 | 57 | 56 | 72 |
| Hardness 30s Shore A | 44 | 46 | 53 | 52 | 50 | 67 |
| CS 70°C 72h | 51 | 72 | 48 | 51 | 41 | 50 |
| CS 85°C 72h | 51 | 70 | 50 | 53 | 44 | 53 |
| CS 100°C 24h | 54 | 72 | 48 | 58 | 53 | 62 |

| Properties after foaming: | | | | | | |
|---|---|---|---|---|---|---|
| Foam density, 10³ kg/m³ | 0.74 | n.m. | 0.55 | 0.59 | 0.60 | 0.49 |
| Density reduction after foaming, % | 22 | n.m. | 42 | 38 | 37 | 48 |
| Skin appearance | | | | | No skin | |

| Composition in parts: | | | | | | |
|---|---|---|---|---|---|---|
| Component (a): | 100 | 100 | 100 | 100 | 100 | 100 |
| Component (b): | 24 | 84 | 11 | 24 | 0 | 0 |
| Component (c): | 40 | 65 | 51 | 53 | 50 | 94 |
| n.m. =not measured | | | | | | |

Composition 7 shows that a level of component (c) too low leads to an insufficient density reduction. Composition 8 contains too much component (b) to have acceptable compression set and composition 11 is too hard due to the high level of component (c). Composition H seems to have a good balance of properties but the foamed profile obtained with this composition does not have any skin. This open cell structure is obtained because pre-foaming occurs into the die of the extruder, as the die pressure is too low. Compositions 9 and 10 are examples of right ingredients ratio leading to right balance of properties.

### Table 5

As shown with this series of examples, the choice of the linear crystalline polymer is critical.

The foamable compositions have all been prepared in the dryblend process, with 2%wt of Hydrocerol BIH 40.

| | 9 | 12 | 13 | 14 |
|---|---|---|---|---|
| Composition B | 85 | 85 | 85 | |
| Composition F | 10 | 10 | 10 | |
| Composition based HDPE | | | | 100 |
| Moplen HP502L (PI=5,49) | 5 | | | |
| Moplen HP1078 (PI=5,29) | | 5 | | |
| Moplen HP501L (PI=3.94) | | | 5 | |
| Rigidex HD5226EA (HDPE) | | | | 5 |

| Properties before foaming: | | | | |
|---|---|---|---|---|
| Hardness 3s Shore A | 58 | 59 | 58 | 60 |
| Hardness 30s Shore A | 53 | 55 | 54 | 54 |
| CS 70°C 72h | 48 | 47 | n.m. | 25 |
| CS 85°C 72h | 50 | 50 | | n.m. |
| CS 100°C 24h | 48 | 50 | | 35 |

| Properties after foaming: | | | | |
|---|---|---|---|---|
| Foam density, 10³ kg/m³ | 0.55 | 0.60 | 0.72 | 0.83 |
| Density reduction after foaming, % | 42 | 37 | 24 | 13 |
| n.m. = not measured | | | | |

Even though a HDPE gives better compression set value, such a polyolefin is not suitable for the production of low density profile.

Among the wide range of homopolypropylene available on the market, only the ones having a large molecular weight distribution (expressed here by the polydispersity index PI) can be used.

### Table 6

This Table shows the importance of the presence of a nucleating and a blowing agent. The choice of the blowing agent plays also a role on the aspect of the final foamed profile. The foamable composition used here have been prepared in the dryblend process from 85 parts of Composition B; 10 parts of Composition F; 5 parts of Moplen HP502L and various amounts of nucleating agent and/or blowing agent. As a result it has (before foaming) the following properties: Hardness 3s (Shore A) of 58; Harness 30s (Shore A) of 53; Compression Set at 70°C and 72 hours of 48; CS at 85°C, 72h of 50, and CS at 100°C, 72h of 48.

| | 9 | 15 | 16 | 17 | 18 | 19 | 20 | 21 |
|---|---|---|---|---|---|---|---|---|
| Nucleating agent : | | | | | | | | |
| Hydrocerol BIH 40 | 0.5% | 0.5% | 0.0% | 0.5% | 0.5% | 0.0% | 0.5% | 1.0% |

| Blowing agent: | | | | | | | | |
|---|---|---|---|---|---|---|---|---|
| Hydrocerol BIH 40 | 1.5% | | | 0.0% | | | | |
| Gas CO₂ | | CO2 | CO2 | | | | | |
| Genitron PB 10 | | | | | 1.5% | 2% | | |
| Cylacell | | | | | | | 1.5% | 1.5% |

| Properties after foaming: | | | | | | | | |
|---|---|---|---|---|---|---|---|---|
| Foam density, kg/m³ | 0.55 | 0.35 | 0.48 | 0.75 | 0.62 | 0.58 | 0.62 | 0.59 |
| Density reduction % | 42 | 63 | 49 | 21 | 35 | 39 | 35 | 38 |

| **Composition** | **Appearance** | | | | | | | |
|---|---|---|---|---|---|---|---|---|
| **9** | | | | | | | | |
| **15** | Open skin | | | | | | | |
| **16** | No skin, big bubbles (Very Rough) | | | | | | | |
| **17** | | | | | | | | |
| **18** | Bigger bubbles | | | | | | | |
| **19** | Not homogeneous (Rough) | | | | | | | |
| **20** | Big bubbles | | | | | | | |
| **21** | | | | | | | | |

## Claims

1. Foamable compositions which are usable for the manufacture of foamed, flexible, heat resistant, thermoplastic elastomeric articles, and which comprise at least:
a) 100 parts by weight of one ore more selectively hydrogenated block copolymers, having at least two resinous blocks A of non-hydrogenated predominantly polymerized monovinyl arene, and a selectively hydrogenated elastomeric block B, wherein said block B prior to hydrogenation being predominantly a polymerized conjugated diene or dienes, said block copolymer having a total apparent molecular weight of at least 250 kg/mole, and containing polymerized monovinyl arene blocks of true molecular weight of at least 18 kg/mole,
b) 5 to 50 parts by weight of one or more selectively hydrogenated block copolymers having at least two resinous blocks A' of non-hydrogenated predominantly polymerized monovinyl arene, and an selectively hydrogenated elstomeric block B', wherein said block B' prior to hydrogenation has been derived from a polymerized conjugated diene or dienes as a major component which may be mixed with minor proportions of other copolymers (e.g. vinyl aromatic) i.e. ≤ 25 wt%, and said block copolymer having a total apparent molecular weight in the range of from 50 to 180 kg/mole while the resinous blocks A' shown an true molecular weight in the range of from 3 to 20 kg/mole and preferably from 5 t0 15 kg/mole,
c) from 25 to 80 parts by weight of a linear crystalline polymer comprising propylene as major component, with a Vicat softening temperature in the range of from 130°C to 180°C and a melt flow range (MFR) of from 0.5 to 30 dg/min and a polydisperity index of at least 4.5,
d) from 100 to 250 parts by weight of a softener compatible with blocks B and B',
e) from 0.01 to 3 wt%, relative to the weight of the primary components (a) up to (e) of a solid chemical nucleating agent of the endothermic group in combination with a blowing agent,
and optionally
f) one or more secondary components selected from PPO and/or any resins compatible with block copolymer component (a), antioxidants, UV-stabilizers, flame retardants, surface modifying agents and inorganic fillers.

2. Foamable compositions according to claim 1, which comprise as components (a) and (b) at least one block copolymers of the general formulae
ABA, (AB)ₙX or ABA"B" and A'B'A' (A'B')ₙX or A'B'A"B" respectively, wherein A, A' and A" represent a poly(monovinyl arene) block and B, B' and B" represent a hydrogenated poly(conjugated diene(s)) block, wherein n is an integer ≥2 and wherein X is the remainder of a coupling agent, wherein the blocks A, A' and A" are different and the blocks A are larger than the blocks A', which are in turn larger than A", while the blocks B and B' are larger than B".

3. Foamable compositions according to claim 2, wherein the block copolymer component (a) has the formula ABA or (AB)ₙX, has a total apparent molecular weight in the range of from 250 to 600 kg/mole, wherein A represents a substantially pure poly(styrene) block and wherein the poly(styrene) block content in said block copolymer (a) is in the range of from 20 to 35 wt% and wherein B represents a hydrogenated poly(butadiene) block.

4. Foamable compositions according to claim 2, wherein the block copolymer component (b) has the formula A'B'A' or (A'B')ₙX, has a total apparent molecular weight in the range of from 80 to 160 kg/mole, wherein A' represents a substantially pure poly(styrene) block, each having a molecular weight in the range of from 5 to 15 kg/mole.

5. Foamable compositions according to claims 1-4, wherein the weight ratio between the block copolymer components (a) and (b) is in the range of from 10 to 40 parts by weight of component (b) per 100 parts by weight of component (a).

6. Foamable compositions according to claims 1-5, wherein component (c) is a single polymer or a mixture of polymers predominantly composed of propylene monomer or a copolymer of predominantly propylene with a minor proportion of a different alkylene selected from ethylene or butylenes, i.e. less than 25 wt% of the monomer mixture.

7. Foamable compositions according to claim 6, wherein component (c) has a melt flow range between 2 and 15 dg/min at 230°C/2.16 kg, a Vicat softening temperature in the range of from 130 to 170°C, and occurs in a weight ratio of from 42 to 65 parts by weight of (c) per 100 parts by weight of (a).

8. Foamable compositions according to claim 7, wherein the component (c) shows a polydispersity index ≥ 5.

9. Foamable compositions according to claims 1-8, wherein component (d) is a paraffinic oil.

10. Foamable compositions according to claims 1-9, wherein component (e) is selected from mixtures of NaHCO₃ and citric acid or sodium citrate, on amounts of from 0.5 to 1 wt%, relative to the weight of components (a) up through (d) .

11. Foamed articles derived from the compositions according to claims 1-10.

12. Preblends for the preparation of the foamable compositions according to claims 1-10, comprising either the components (a), (c) and (d) or the components (b), (c) and/or (d).

## Patentansprüche

1. Aufschäumbare Zusammensetzungen, die zur Herstellung aufgeschäumter, flexibler, wärmebeständiger, thermoplastischer elastomerer Gegenstände verwendbar sind und die wenigstens folgendes umfassen:
a) 100 Gewichtsteile eines oder mehrerer selektiv hydrierter Blockcopolymere, mit wenigstens zwei harzhaltigen Blöcken A eines nicht hydrierten überwiegend polymerisierten Monovinylarens und einen selektiv hydrierten elastomeren Block B, worin der Block B vor der Hydrierung überwiegend ein polymerisiertes konjugiertes Dien oder Diene ist, wobei das Blockcopolymer ein gesamtes scheinbares Molekulargewicht von wenigstens 250 kg/mol aufweist und polymerisierte Monovinylarenblöcke mit einem wahren Molekulargewicht von wenigstens 18 kg/mol enthält,
b) 5 bis 50 Gewichtsteile eines oder mehrerer selektiv hydrierter Blockcopolymere mit wenigstens zwei harzhaltigen Blöcken A' eines nicht hydrierten überwiegend polymerisierten Monovinylarens und einen selektiv hydrierten elastomeren Block B', worin der Block B' vor der Hydrierung sich von einem polymerisierten konjugierten Dien oder Dienen als Hauptbestandteil ableitet, der mit geringen Anteilen anderer Copolymere (zum Beispiel vinylaromatische) gemischt werden kann, das heißt ≤ 25 Gewichts-%, und wobei das Blockcopolymer ein gesamtes scheinbares Molekulargewicht im Bereich von 50 bis 180 kg/mol aufweist, während die harzhaltigen Blöcke A' ein wahres Molekulargewicht im Bereich von 3 bis 20 kg/mol und vorzugsweise von 5 bis 15 kg/mol aufweisen,
c) 25 bis 80 Gewichtsteile eines Propylen als Hauptbestandteil umfassenden linearen kristallinen Polymers mit einer Vicat-Erweichungstemperatur im Bereich von 130 °C bis 180 °C und einem Schmelzflußbereich (MFR) von 0,5 bis 30 dg/min und einem Polydispersitätsindex von wenigstens 4,5,
d) 100 bis 250 Gewichtsteile eines mit den Blöcken B und B' kompatiblen Weichmachers,
e) 0,01 bis 3 Gewichts-% bezogen auf das Gewicht der Grundbestandteile (a) bis (e) eines festen chemischen Nukleierungsmittels der endothermen Gruppe in Kombination mit einem Blähmittel,
und optional
f) ein oder mehrere sekundäre Bestandteile, die ausgewählt sind aus PPO und/oder Harzen, die mit dem Blockcopolymerbestandteil kompatibel sind, Antioxidantien, UV-Stabilisatoren, Flammverzögerungsmittel, Oberflächen modifizierenden Mitteln und anorganischen Füllstoffen.

2. Aufschäumbare Zusammensetzungen nach Anspruch 1, die als Bestandteile (a) und (b) wenigstes ein Blockcopolymer der allgemeinen Formeln ABA, (AB)ₙX oder ABA"B" und A'B'A' (A'B')ₙX beziehungsweise A'B'A"B" umfassen, worin A, A' und A" einen Poly(monovinylaren)block darstellen und B, B' und B" einen hydrierten Poly(konjugiertes Dien(e))block darstellen, worin n einen ganze Zahl ≥ 2 ist und worin X der Rest eines Kopplungsmittels ist, worin die Blöcke A, A' und A" unterschiedlich sind und die Blöcke A größer als die Blöcke A' sind, die wiederum größer als A" sind, während die Blöcke B und B' größer als B" sind.

3. Aufschäumbare Zusammensetzungen nach Anspruch 2, worin der Blockcopolymerbestandteil (a) die Formel ABA oder (AB)ₙX aufweist, ein gesamtes scheinbares Molekulargewicht im Bereich von 250 bis 600 kg/mol aufweist, worin A einen im Wesentlichen reinen Poly(styrol)block darstellt und worin der Poly(styrol)gehalt in dem Blockcopolymer (a) im Bereich von 20 bis 35 Gewichts-% liegt und worin B einen hydrierten Poly(butadien)block darstellt.

4. Aufschäumbare Zusammensetzungen nach Anspruch 2, worin der Blockcopolymerbestandteil (b) die Formel A'B'A' oder (A'B')ₙX aufweist, ein gesamtes scheinbares Molekulargewicht im Bereich von 80 bis 160 kg/mol aufweist, worin A' einen im Wesentlichen reinen Poly(styrol)block darstellt, wobei jeder ein Molekulargewicht im Bereich von 5 bis 15 kg/mol aufweist.

5. Aufschäumbare Zusammensetzungen nach Anspruch 1-4, worin das Gewichtsverhältnis zwischen den Blockcopolymerbestandteilen (a) und (b) im Bereich von 10 bis 40 Gewichtsteilen des Bestandteils (b) auf 100 Gewichtsteile des Bestandteils (a) liegt.

6. Aufschäumbare Zusammensetzungen nach Anspruch 1-5, worin der Bestandteil (c) ein einzelnes Polymer oder eine Mischung von Polymeren ist, die überwiegend aus Propylenmonomer zusammengesetzt ist, oder ein Copolymer ist aus überwiegend Propylen mit einem geringen Anteil eines davon verschiedenen Alkylens, ausgewählt aus Ethylen oder Butylen, das heißt weniger als 25 Gewichts-% der Monomermischung.

7. Aufschäumbare Zusammensetzungen nach Anspruch 6, worin der Bestandteil (c) einen Schmelzflußbereich zwischen 2 und 15 dg/min bei 230 °C/2,16 kg, eine Vicat-Erweichungstemperatur im Bereich von 130 bis 170 °C aufweist und in einem Gewichtsverhältnis von 42 bis 65 Gewichtsteile (c) auf 100 Gewichtsteile (a) vorkommt.

8. Aufschäumbare Zusammensetzungen nach Anspruch 7, worin der Bestandteil (c) einen Polydispersitätsindex ≥ 5 aufweist.

9. Aufschäumbare Zusammensetzungen nach Anspruch 1-8, worin der Bestandteil (d) ein Paraffinöl ist.

10. Aufschäumbare Zusammensetzungen nach Anspruch 1-9, worin der Bestandteil (e) aus den Mischungen aus NaHCO₃ und Zitronensäure oder Natriumcitrat in Mengen von 0,5 bis 1 Gewichts-% bezogen auf das Gewicht der Bestandteile (a) bis (d) ausgewählt ist.

11. Aufgeschäumte Gegenstände, die sich von den Zusammensetzungen nach Anspruch 1-10 ableiten.

12. Vormischungen zur Herstellung der aufschäumbaren Zusammensetzungen nach Anspruch 1-10, die entweder die Bestandteile (a), (c) und (d) oder die Bestandteile (b), (c) und/oder (d) umfassen.

## Revendications

1. Compositions expansibles qui peuvent être utilisées pour la fabrication d'articles élastomères thermoplastiques, résistants à la chaleur, souples, expansés, et qui comprennent au moins :
a) 100 parties en poids d'un ou plusieurs copolymères à blocs sélectivement hydrogénés, ayant au moins deux blocs résineux A d'arène monovinylique non hydrogéné essentiellement polymérisé, et un bloc élastomère B sélectivement hydrogéné, ledit bloc B, avant hydrogénation, étant principalement un diène ou des diènes conjugués polymérisés, ledit copolymère bloc ayant un poids moléculaire apparent total d'au moins 250 kg/mole, et contenant des blocs d'arène monovinylique polymérisé ayant un poids moléculaire réel d'au moins 18 kg/mole,
b) 5 à 50 parties en poids d'un ou plusieurs copolymères à blocs sélectivement hydrogénés ayant au moins deux blocs résineux A' d'arène monovinylique non hydrogéné essentiellement polymérisé, et un bloc élastomère B' sélectivement hydrogéné, ledit bloc B', avant hydrogénation, ayant été obtenu à partir d'un diène ou de diènes conjugués polymérisés en tant que composant majeur qui peut être mélangé avec des proportions mineures d'autres copolymères (par exemple un vinyle aromatique), c'est-à-dire ≤ 25 % en poids, et ledit copolymère blocs ayant un poids moléculaire apparent total dans la gamme de 50 à 180 kg/mole alors que les blocs résineux A' présentent un poids moléculaire réel dans la gamme de 3 à 20 kg/mole et de préférence de 5 à 15 kg/mole,
c) de 25 à 80 parties en poids d'un polymère cristallin linéaire comprenant du propylène en tant que composant majeur, avec une température de ramollissement Vicat dans la gamme de 130 C à 180 C et une plage d'écoulement à l'état fondu (MFR) de 0,5 à 30 dg/min et un indice de polydispersité d'au moins 4,5,
d) de 100 à 250 parties en poids d'un plastifiant compatible avec les blocs B et B',
e) de 0,01 à 3 % en poids, par rapport au poids des composants primaires (a) jusqu'à (e) d'un agent de nucléation chimique solide du groupe endothermique en combinaison avec un agent gonflant,
et facultativement
f) un ou plusieurs composants secondaires choisis parmi PPO et/ou une quelconque résine compatible avec le composant copolymère à blocs (a), des anti-oxydants, des stabilisants UV, des agents ignifuges, des agents modificateurs de surface et des charges inorganiques.

2. Compositions expansibles selon la revendication 1, laquelle comprend comme composants (a) et (b) au moins un copolymère à blocs ayant la formule générale
ABA, (AB)ₙX ou ABA"B" et A'B'A' (A'B')ₙX ou A'B'A"B" respectivement, dans laquelle A, A' et A" représentent un bloc de poly(arène monovinylique) et B, B' et B" représentent un bloc de poly(diène(s) conjugué(s)) hydrogéné, dans laquelle n est un entier ≥ 2 et dans laquelle X est le résidu d'un agent de couplage, dans laquelle les blocs A, A' et A" sont différents et les blocs A sont plus grands que les blocs A', qui sont à leur tour plus grands que A", alors que les blocs B et B' sont plus grands que B".

3. Compositions expansibles selon la revendication 2, dans lesquelles le composant copolymère à blocs (a) a la formule ABA ou (AB)ₙX, a un poids moléculaire apparent total dans la gamme de 250 à 600 kg/mole, dans laquelle A représente un bloc de poly(styrène) sensiblement pur et dans laquelle la teneur en blocs de poly(styrène) dans ledit copolymère séquencé (a) est dans la gamme de 20 à 35 % en poids, et dans laquelle B représente un bloc de poly(butadiène) hydrogéné.

4. Compositions expansibles selon la revendication 2, dans lesquelles le composant copolymère à blocs (b) a la formule A'B'A' ou (A'B')ₙX, a un poids moléculaire apparent total dans la gamme de 80 à 160 kg/mole, dans laquelle A' représente un bloc de poly(styrène) sensiblement pur, chacun ayant un poids moléculaire dans la gamme de 5 à 15 kg/mole.

5. Compositions expansibles selon les revendications 1 à 4, dans lesquelles le rapport de poids entre les composants copolymères à blocs (a) et (b) est dans la gamme de 10 à 40 parties en poids de composant (b) pour 100 parties en poids du composant (a).

6. Compositions expansibles selon les revendications 1 à 5, dans lesquelles le composant (c) est un polymère unique ou un mélange de polymères principalement constitués de monomère propylène ou d'un copolymère principalement formé de propylène avec une proportion mineure d'un alkylène différent choisi parmi l'éthylène ou le butylène, c'est-à-dire inférieure à 25 % en poids du mélange de monomères.

7. Compositions expansibles selon la revendication 6, dans lesquelles le composant (c) a une gamme d'écoulement à l'état fondu entre 2 et 15 dg/min à 230°C/2,16 kg, une température de ramollissement Vicat dans la gamme de 130 à 170°C, et apparaît dans un rapport de poids de 42 à 65 parties en poids de (c) pour 100 parties en poids de (a).

8. Compositions expansibles selon la revendication 7, dans lesquelles le composant (c) présente un indice de polydispersité ≥ 5.

9. Compositions expansibles selon les revendications 1 à 8, dans lesquelles le composant (d) est une huile paraffinique.

10. Compositions expansibles selon les revendications 1 à 9, dans lesquelles le composant (e) est choisi parmi des mélanges de NaHCO₃ et d'acide citrique ou de citrate de sodium, dans des quantités de 0,5 à 1 % en poids, par rapport au poids des composants (a) à (d).

11. Articles expansés obtenus à partir des compositions selon les revendications 1 à 10.

12. Prémélanges pour la préparation des compositions expansibles selon les revendications 1 à 10, comportant soit les composants (a), (c) et (d), soit les composants (b), (c) et/ou (d).
